Europäisches Patentamt

European Patent Office

Office européen des brevets

(19)

(11) Veröffentlichungsnummer: **0 312 102 B1**

(12) # EUROPÄISCHE PATENTSCHRIFT

(45) Veröffentlichungstag der Patentschrift: **22.04.92**

(21) Anmeldenummer: **88117142.5**

(22) Anmeldetag: **14.10.88**

(51) Int. Cl.⁵: **C01B 3/16**, B01J 31/06, B01J 31/16

(54) **Verfahren und Katalysator zur Konvertierung von C0/H2O-Gemischen.**

(30) Priorität: **16.10.87 DE 3735127**

31-12-1984

(43) Veröffentlichungstag der Anmeldung:
**19.04.89 Patentblatt 89/16**

(45) Bekanntmachung des Hinweises auf die
Patenterteilung:
**22.04.92 Patentblatt 92/17**

(84) Benannte Vertragsstaaten:
**AT BE CH DE FR GB IT LI LU NL SE**

(56) Entgegenhaltungen:
DE-A- 3 029 599      FR-A- 2 189 119
GB-A- 2 028 850      US-A- 4 151 107
US-A- 4 220 556      US-A- 4 473 505

**CHEMICAL ABSTRACTS, Band 102, Nr. 14, April 1985, Seite 141, Zusammenfassung Nr. 115930v, Columbus, Ohio, US; & SU-A-938 516 (INSTITUTE OF CHEMICAL PHYSICS, CHERNOGOLOVKA; etc.) 23-11-1984**

**CHEMICAL ABSTRACTS, Band 104, Nr. 24, Juni 1986, Seite 128, Zusammenfassung Nr. 209509h, Columbus, Ohio, US; & PL-B-128 190 (UNIWERSYTET WROCLAWSKI)**

(73) Patentinhaber: **FRAUNHOFER-GESELLSCHAFT ZUR FÖRDERUNG DER ANGEWANDTEN FOR-SCHUNG E.V.**
**Leonrodstrasse 54**
**W-8000 München 19(DE)**

(72) Erfinder: **Schubert, Ulrich**
**Dubliner Strasse 10**
**W-8700 Würzburg(DE)**
Erfinder: **Rose, Klaus**
**J.-A.-Kleinschroth-Strasse 7**
**W-8710 Kitzingen(DE)**

(74) Vertreter: **Barz, Peter, Dr. et al**
**Patentanwälte Dipl.-Ing. G. Dannenberg Dr. P. Weinhold, Dr. D. Gudel Dipl.-Ing. S. Schubert, Dr. P. Barz Siegfriedstrasse 8**
**W-8000 München 40(DE)**

EP 0 312 102 B1

**Beschreibung**

Die Erfindung betrifft ein Verfahren und Katalysatoren zur Konvertierung von $CO/H_2O$-Gemischen, insbesondere Wassergas.

Für die Wassergas-Konvertierung werden industriell hauptsächlich oxidische Heterogen-Katalysatoren eingesetzt, die jedoch nur bei höheren Temperaturen von beispielsweise 200 bis 500°C wirksam sind.

Ferner sind Katalysatoren bekannt, welche die Reaktion in homogener Phase katalysieren, z.B. lösliche Rhodium-Verbindungen wie $Rh_6(CO)_{16}$. Diese Homogen-Katalysatoren haben jedoch den Nachteil, daß sie schlecht abtrennbar sind und nachgeschaltete Aufarbeitungsschritte erfordern.

Aufgabe der Erfindung ist es daher, ein Verfahren und Katalysatoren zur Konvertierung von $CO/H_2O$-Gemischen bereitzustellen, welche eine heterogene Katalyse unter milden Bedingungen und ohne aufwendige Aufarbeitungsmaßnahmen ermöglichen.

Gegenstand der Erfindung ist ein Verfahren zur katalytischen Konvertierung von $CO/H_2O$-Gemischen unter Verwendung von Rhodium-Komplexkatalysatoren, das dadurch gekennzeichnet ist, daß man die Reaktion in Gegenwart von festen, polymeren, in wässrigen und organischen Lösungsmitteln unlöslichen Rhodium-Komplexkatalysatoren durchführt, die durch Polykondensation von einem oder mehreren Rhodium-Komplexen, die mindestens einen Liganden aufweisen, welcher mindestens eine zur Koordination des Rhodiums befähigte Gruppe und mindestens eine bei der Polykondensation ein anorganisches Netzwerk ausbildende Gruppe aufweist, entweder mit sich selbst oder mit einem oder mehreren, zur Polykondensation befähigten anorganischen Netzwerkbildnern erhältlich sind, wobei sich die das anorganische Netzwerk ausbildenden Gruppen und die Netzwerkbildner von Silicium, Titan, Aluminium und/oder Bor ableiten.

Die genannten Katalysatoren katalysieren beide folgenden Reaktionen:

$$CO + H_2O \rightarrow CO_2 + H_2;$$
$$CO + 1/2\ O_2 \rightarrow CO_2;$$

Sie eignen sich daher insbesondere zur Herstellung von $H_2$ aus $CO/H_2O$-Gemischen, aber auch gegebenenfalls zur Erzeugung von $CO_2$. Diese Endprodukte können z.B. zur Ammoniaksynthese oder in der $C_1$-Chemie eingesetzt werden.

Im Gegensatz zu herkömmlichen Verfahren kann das erfindungsgemäße Verfahren unter relativ milden Bedingungen durchgeführt werden. Die Reaktionstemperatur liegt gewöhnlich im Bereich von 10 bis 200°C, vorzugsweise 50 bis 100°C. Das Verfahren kann bei Normaldruck, Unterdruck oder Überdruck durchgeführt werden, wobei der Reaktionsdruck im allgemeinen im Bereich von 0,001 bis 300 bar, vorzugsweise 0,1 bis 50 bar, liegt. Das Arbeiten bei Normaldruck ist bevorzugt.

Das erfindungsgemäße Verfahren kann kontinuierlich, diskontinuierlich oder intermittierend z.B. in Strömungsrohren, Autoklaven, Wirbelschicht-, Festbett- oder Fließbett-Reaktoren durchgeführt werden.

Der Katalysator wird zur Konvertierung mit einem $CO/H_2O$-Gemisch, beispielsweise einem mit $H_2O$ gesättigten CO-Strom oder Wassergas, in Kontakt gebracht. Das eingesetzte Gasgemisch kann gegebenenfalls $O_2$ (vorzugsweise in einer Menge von 0 bis 20 Volumenprozent, bezogen auf CO) und/oder Inertgase, wie z.B. $N_2$, enthalten.

In einer anderen Ausführungsform des erfindungsgemäßen Verfahrens verwendet man einen mit Wasser angefeuchteten Katalysator, über den ein CO-Strom geleitet wird. Die während der Reaktion auftretenden Wasserverluste können z.B. durch Auftropfen von Wasser auf den Katalysator ausgeglichen werden.

Die erfindungsgemäß verwendeten Katalysatoren sind feste, polymere, in wässrigen und organischen Lösungsmitteln unlösliche Rhodium-Komplexkatalysatoren, die erhältlich sind durch Polykondensation von einem oder mehreren Rhodium-Komplexen, die mindestens einen Liganden aufweisen, welcher mindestens eine zur Koordination des Rhodiums befähigte Gruppe und mindestens eine bei der Polykondensation ein anorganisches Netzwerk ausbildende Gruppe aufweist, entweder mit sich selbst oder mit einem oder mehreren, zur Polykondensation befähigten anorganischen Netzwerkbildner.

Katalysatoren dieses Typs sind z.B. in der DE-A-30 29 599 beschrieben.

Eine bevorzugte Gruppe der zur Katalysatorherstellung eingesetzten Rhodium-Komplexe hat die allgemeine Formel (I):

$$[L_aL'_bhX_c]_d \qquad (I)$$

in der L ein Ligand mit einer zur Koordination des Rhodiums befähigten Elektronendonor-Gruppe, vorzugsweise einer Phosphingruppe, und einer bei der Polykondensation ein anorganisches Netzwerk ausbildenden Gruppe ist, z.B. einer Alkoxysilan-, -aluminium-, -titan- oder -borgruppe;

$L'$ ein von L verschiedener Elektronendonor-Ligand ist, vorzugsweise ein Phosphin-, Carbonyl- oder Amino-Ligand;

X ein zum Ladungsausgleich erforderliches organisches oder anorganisches Anion ist, vorzugsweise ein Halogenid-, Hydrid-oder Alkoholat-Anion oder ein Anion von organischen oder anorganischen Säuren;

a einen Wert von 1 bis 4 hat, vorzugsweise den Wert 1, 2 oder 3;

b einen Wert von 0 bis 4 hat, vorzugsweise den Wert 0, 1 oder 2;

c einen Wert von 0 bis 3 hat, wobei die Summe $(a + b + c) \leq 6$ ist; und

d eine ganze Zahl mit einem Wert $\geq 1$ ist, vorzugsweise die Zahl 1, 2, 4 oder 6.

Typische Liganden L haben z.B. die allgemeine Formel:

$$PR_2(CH_2)_nSi(OR')_3$$

in der R insbesondere Alkyl (vorzugsweise $C_1$-$C_6$), Cycloalkyl (vorzugsweise $C_6$), Aryl (vorzugsweise $C_6$-$C_{10}$) oder Aralkyl (vorzugsweise Benzyl) bedeutet; $R'$ Alkyl (vorzugsweise $C_1$-$C_6$) ist und n einen Wert von 1 bis 10 hat, vorzugsweise den Wert 1, 2, 3 oder 4.

Ein spezielles Beispiel für derartige Liganden L ist der Ligand:

$$P(C_6H_5)_2(CH_2)_2Si(OC_2H_5)_3$$

Spezielle Beispiele für den Elektronendonor-Liganden L' sind in der DE-A-30 29 599 genannt, wie etwa CO, NO, $P(C_6H_5)_3$, $As(C_6H_5)_3$, Phosphit, Amin, Sulfid, Olefin, Diolefin, Acetylen, Nitril, Isonitril, Cyanat, Isocyanat und Wasser.

Spezielle Beispiele für das Anion X sind ebenfalls in der DE-A-30 29 599 genannt, z B. das Chlorid-, Bromid-, Iodid-, Nitrat-, Acetylacetonat-, Acetat-, Trifluoracetat-, Trichloracetat-, Propionat-, Methylat-, Ethylat-, Propylat-, Butylat-, Phenylat-, Perchlorat-, Tetraphenylborat-, Hexafluorophosphat-, Methyl-, Ethyl-, Propyl-, Butyl-, Phenyl- oder Perfluorphenylion, gegebenenfalls unter vollständigem oder partiellem Ersatz dieser Anionen durch das Hydridion.

Die zur Katalysatorherstellung eingesetzten Rhodium-Komplexe können z.B. die Formel $Rh(CO)ClL_2$ oder $RhCl_3L_3$ haben. Die Herstellung von Rhodium-Komplexen der Formel $Rh(CO)ClL_2$ mit $L = P(C_6H_5)_2$-$(CH_2)_2Si(OC_2H_5)_3$ ist z.B. in den DE-A-20 62 351 und 20 62 352 beschrieben.

Eine weitere bevorzugte Gruppe der zur Katalysatorherstellung eingesetzten Rhodium-Komplexe hat die allgemeine Formel (II)

$$\{[L'_bRhX_{c'}]_d\}L''_a \qquad (II)$$

in der $L''$ ein Ligand mit einer zur Koordination des Rhodiums befähigten ionischen Gruppe, vorzugsweise einer Ammoniumgruppe, und einer bei der Polykondensation ein anorganisches Netzwerk ausbildenden Gruppe ist, vorzugsweise einer Alkoxysilan-, -aluminium-, -titan- oder -borgruppe;

$L'$ ein Elektronendonor-Ligand ist, vorzugsweise ein Phosphin-, Carbonyl- oder Amino-Ligand;

X ein zum Ladungsausgleich erforderliches organisches oder anorganisches Anion ist, vorzugsweise ein Halogenid-, Hydrid-oder Alkoholat-Anion oder ein Anion von organischen oder anorganischen Säuren;

a einen Wert hat,der erforderlich ist, um die Ladung des Komplexanions oder -kations auszugleichen.

b einen Wert von 0 bis 4 hat, vorzugsweise den Wert 0, 1 oder 2;

$c'$ einen Wert von 0 bis 6 hat, wobei die Summe $(b + c') \leq 6$ ist; und

d eine ganze Zahl mit einem Wert $\geq 1$ ist.

Häufig anzutreffende Werte von a sind die Werte von 1 bis 4, insbesondere 1, 2 und 3.

Typische Liganden $L''$ haben z.B. die allgemeine Formel:

$$R_mN[(CH_2)_n\text{-}Si(OR')_3]_{4\text{-}m}$$

in der R Wasserstoff, Alkyl (vorzugsweise $C_1$-$C_6$), Cycloalkyl (vorzugsweise $C_6$), Aryl (vorzugsweise $C_6$-$C_{10}$) oder Aralkyl (vorzugsweise Benzyl) bedeutet;

$R'$ Alkyl (vorzugsweise $C_1$-$C_6$) darstellt;

X ein zum Ladungsausgleich erforderliches organisches oder anorganisches Anion ist, vorzugsweise ein Halogenid-Anion;

m einen Wert von 0 bis 3 hat, vorzugsweise den Wert 1, 2 oder 3; und

n einen Wert von 1 bis 10 hat, vorzugsweise den Wert 1, 2, 3 oder 4.

Gegenstand der Erfindung sind neue Rhodium-Komplexe dieses Typs, welche die allgemeine Formel (III) haben:

$R_mN[(CH_2)_n-Si(OR')_3]_{4-m}[Rh(CO)_2X_2]$

in der R, R$'$, X, m und n die vorstehende Bedeutung haben. Ein spezieller Rhodium-Komplex dieser Art hat die Formel (IV):

$(CH_3)_3N[(CH_2)_3-Si(OCH_3)_3][Rh(CO)_2Cl_2]$.

Bei den vorstehend beschriebenen Rhodium-Komplexen können mehrmals vorhandene Reste L, L$'$, L$''$, R, R$'$ und X dieselbe oder unterschiedliche Bedeutung haben.

Zur Herstellung der erfindungsgemäß eingesetzten Rhodium-Komplexkatalysatoren werden ein oder mehrere der vorstehend genannten Rhodium-Komplexe entweder mit sich selbst oder mit einem oder mehreren, zur Polykondensation befähigten anorganischen Netzwerkbildnern unter Ausbildung eines anorganischen Netzwerkes polykondensiert.

Bevorzugte anorganische Netzwerkbildner sind zur Polykondensation befähigte Verbindungen von Silicium, Titan, Aluminium und/oder Bor, insbesondere deren Alkoxide und Halogenide. Besonders bevorzugte Netzwerkbildner sind Alkoxysilane, die bei der Cokondensation ein silicatisches Netzwerk ergeben.

Die Polykondensation erfolgt gewöhnlich in einem mit Wasser mischbaren organischen Lösungsmittel in Gegenwart mindestens der zur Hydrolyse der zur Polykondensation befähigten Gruppen stöchiometrisch erforderlichen Wassermenge sowie gegebenenfalls in Gegenwart eines Kondensationskatalysators.

Verwendbare Lösungsmittel sind z.B. Alkohole, wie Methanol, Ethanol, n-Propanol oder Isobutanol, Ketone, wie Aceton Ether, wie Tetrahydrofuran oder Dioxan, und Acetonitril. Als Kondensationskatalysatoren eignen sich Säuren oder Basen, wobei anorganische Säuren, wie Phosphorsäure, bevorzugt sind.

Das Wasser wird gewöhnlich im Überschuß bezüglich der zur Hydrolyse befähigten Gruppen, z.B. in 7-fachem molarem Überschuß, angewandt. Hierbei kann die entsprechende Menge an wässriger Säure eingesetzt werden, die in diesem Fall sowohl die katalytisch wirksamen $H^+$-Ionen und die zur Hydrolyse notwendige Wassermenge enthält.

Das Mengenverhältnis von Rhodium-Komplex zu anorganischem Netzwerkbildner kann beliebig gewählt werden. Über das Mengenverhältnis sowie die Reaktionsbedingungen des Sol-Gel-Prozesses, speziell die Säure- und Wassermenge sowie die Art der Säure, können die chemischen und physikalischen Eigenschaften des erhaltenen Produktes gezielt beeinflußt werden, z.B. der Rhodiumgehalt, die spezifische Oberfläche, Porengröße und Dichte.

Die auf die beschriebene Weise erhaltenen Rhodium-Komplexkatalysatoren stellen feste, polymere, in wässrigen und organischen Lösungsmitteln unlösliche Substanzen dar. Sie können gegebenenfalls durch Auswaschen von Kondensationskatalysator befreit und anschließend getrocknet werden.

Die Verankerung in einem anorganischen, z.B. silicatischen Netzwerk, ist ein entscheidender Faktor für die katalytische Wirkung der erfindungsgemäßen Katalysatoren bei der Konvertierung von $CO/H_2O$-Gemischen. Während die z.B. in der DE-A-30 29 599 beschriebenen Reaktionen auch von löslichen (homogenen) Rhodium-Komplexen katalysiert werden, wird die Wassergasreaktion nur in heterogener Phase katalysiert, d.h., es ist eine Verankerung des Rhodium-Komplexes in einem anorganischen Netzwerk erforderlich. Ohne Netzwerk wird keine katalytische Wirkung beobachtet.

Gegenüber herkömmlichen Katalysatoren für die Wassergas-Konvertierung haben die erfindungsgemäß verwendeten Katalysatoren u.a. die folgenden Vorteile:

- niedrige Betriebstemperatur, Reaktion bei Normaldruck;
- fester Aggregatzustand des Katalysators;
- Metallgehalt des Katalysators über das Mischungsverhältnis von Netzwerkbildner und Rhodium-Komplex leicht variierbar;
- physikalische Eigenschaften des Trägermaterials über den Sol-Gel-Prozeß gezielt einstellbar;
- Rhodium homogen im Katalysator verteilt; d.h. auch bei mechanischem Abrieb kein Aktivitätsverlust.

Die folgenden Beispiele erläutern die Erfindung.

Beispiel 1

Herstellung eines Rhodium-Komplexkatalysators durch Cokondensation von $(CH_3)_3N[(CH_2)_3-Si(OCH_3)_3][Rh(CO)_2Cl_2]$ mit $Si(OCH_3)_4$

Zu einer Lösung von 1,06 g (2,73 mmol) [Rh(CO)$_2$Cl]$_2$ in 50 ml Methanol werden unter N$_2$ zunächst 50 ml 37 % HCl und nach kurzem Rühren 2,11 g (8,19 mmol = 4,55 ml einer 50% Lösung in Methanol) [-(CH$_3$)$_3$N(CH$_2$)$_3$ Si(OCH$_3$)$_3$]$^+$Cl$^-$ und sofort im Anschluß 16,6 g (109,2 mmol) Si(OCH$_3$)$_4$ zugegeben.

Innerhalb kurzer Zeit fällt ein hellgelber Niederschlag aus. Nach Zugabe von weiteren 25 ml Methanol wird die Suspension 2 1/2 d bei Raumtemperatur gerührt. Der Feststoff wird abfiltriert, Lösungsmittelreste werden bei 60°C/10$^{-1}$ Torr entfernt und abschließend wird bei 50°C/10$^{-3}$ Torr getrocknet. IR-Spektrum (Nujol): $\nu_{CO}$ = 2068(vs), 1996(vs) cm$^{-1}$.

Beispiel 2

Herstellung eines Rhodium-Komplexkatalysators durch Cokondensation von Rh(CO)Cl[P(C$_6$H$_5$)$_2$CH$_2$CH$_2$Si-(OC$_2$H$_5$)$_3$] mit Si(OC$_2$H$_5$)$_4$

1,04 g (5 mmol) Si(OC$_2$H$_5$)$_4$ und 0,46 g (0,5 mmol) Rh(CO)Cl[P(C$_6$H$_5$)$_2$CH$_2$CH$_2$Si(OC$_2$H$_5$)$_3$]$_2$ werden in Aceton gelöst. Nach Zugabe von 2,9 ml 2,8 n H$_3$PO$_4$ wird das Gemisch kurzzeitig kräftig gerührt und anschließend bei 20 - 25°C stehengelassen.

Nach 48 h ist das Lösungsmittel vollständig verdampft.

Der verbleibende Rückstand wird 2 h in 30 ml Wasser bei 20 - 25°C gerührt, anschließend über einen Glasfiltertiegel abfiltriert und solange mit Wasser gewaschen, bis das Eluat neutral reagiert, dann mit Aceton, bis das Eluat farblos ist. Anschließend wird der feste Stoff 16 h bei 60°C und 0.01 Torr getrocknet.

Das so hergestellte Material enthält noch Wasser und unkondensierte OH-Gruppen, die aber die katalytische Reaktion nicht beeinträchtigen, da sie sowieso mit feuchtem Katalysator durchgeführt wird.

Elementaranalyse: Ber.Werte (bezogen auf vollständig kondensiertes, wasserfreies Material): C 26,8, H 2,2, Rh 7,9.

Gefunden: C 21,9, H 2,8, Rh 7,8.

BET-Oberfläche 215 m$^2$/g.

Beispiel 3

Durchführung der katalytischen Reaktionen:

a) kontinuierlich:

Versuchsaufbau: Der Katalysator (wie in Beispiel 1 oder 2 erhalten) befindet sich in einem senkrecht stehenden, 3 cm weiten Rohr, das nach unten mit einer Frittenplatte abgeschlossen ist und mittels eines Heizmantels bei konstanter Temperatur gehalten wird. Der Katalysator befindet sich auf der Frittenplatte und wird von unten vom Gasgemisch durchströmt. Das zur Reaktion verwendete CO wird vor dem Kontakt mit dem Katalysator durch einen Kolben mit heißem Wasser (ca. 100°C) geleitet und sättigt sich dabei mit H$_2$O. Nach der Reaktion am Katalysator wird das Gasgemisch entweder in ein Massenspektrometer geleitet (zum qualitativen Nachweis von H$_2$ und CO$_2$) oder in eine wässrige Ba(OH)$_2$-Lösung (zum quantitativen Nachweis von CO$_2$).

Durchführung: 0,5 bis 1,5 g des Katalysators werden auf den Frittenboden gebracht und mit 3 Tropfen Wasser angefeuchtet. Die Temperatur der Reaktionszone wird bei 70°C, die Strömungsgeschwindigkeit des Gases bei 20 ml/min konstant gehalten.

Nach 1 h Betriebsdauer mit gemäß Beispiel 2 hergestellten Katalysatoren wurden folgende CO$_2$-Mengen bestimmt (TN = Umsatzzahlen):

| Katalysator | | gebildetes $CO_2$ | |
|---|---|---|---|
| Rh/Si* | Menge [mg] | Menge [mmol] | TN[mmol $CO_2$/mmol Rh $\cdot$ h] |
| 1:30 | 500 | 6,0 | 33 |
| | 1500 | 6,6 | 13 |
| 1:50 | 500 | 6,4 | 60 |
| | 1500 | 7,5 | 23 |
| 1:70 | 500 | 3,3 | 38 |
| | 1500 | 6,9 | 25 |
| BET-Oberflächen der eingesetzten Materialen: 1:30 = 550 $m^2$/g, 1:50 = 630 $m^2$/g, 1:70 = 695 $m^2$/g. | | | |

\* Cokondensate entsprechender Anteile $Rh(CO)Cl[P(C_2H_5)_2CH_2CH_2Si(OC_2H_5)_3]_2$ und $Si(OC_2H_5)_4$.

Völlig analoge Ausbeuten werden bei Verwendung von Polykondensaten aus $[(CH_3)_3N(CH_2)_3Si(OCH_3)_3][Rh(CO)_2Cl_2]$ oder $RhCl_3(P(C_6H_5)_2CH_2CH_2Si(OC_2H_5)_3)_2$ erhalten.

b) diskontinuierlich:

1,0 g Katalysator wird in einen 100 ml-Kolben gegeben und mit 10 ml Wasser versetzt. Durch kurzzeitiges Evakuieren und anschließendes Belüften mit CO wird der Kolben mit CO unter Normaldruck (1 atm) gefüllt.

Anschließend wird der Katalysator 15 h bei konstanter Temperatur im geschlossenen Kolben gehalten. Nach dieser Zeit werden die gasförmigen Bestandteile im Kolben durch eine wässrige $Ba(OH)_2$-Lösung geblasen, um die entsprechende Menge $CO_2$ festzustellen.

Ausbeute $CO_2$ bei Verwendung von gemäß Beispiel 2 hergestellten Katalysatoren:

Rh/Si = 1:30; T = 100°C; TN = 62 [mmol $CO_2$/mmol Rh]

Rh/Si = 1:50; T = 52°C; TN = 52 [mmol $CO_2$/mmol Rh]

Völlig analoge Ausbeuten werden bei Verwendung von Polykondensaten aus $[(CH_3)_3N(CH_2)_3Si(OCH_3)_3][Rh(CO)_2Cl_2]$ oder $RhCl_3(P(C_6H_5)_2CH_2CH_2Si(OC_2H_5)_3)_2$ erhalten.

**Patentansprüche**

1.  Verfahren zur katalytischen Konvertierung von $CO/H_2O$-Gemischen unter Verwendung von Rhodium-Komplexkatalysatoren, dadurch gekennzeichnet, daß man die Reaktion in Gegenwart von festen, polymeren, in wässrigen und organischen Lösungsmitteln unlöslichen Rhodium-Komplexkatalysatoren durchführt, die durch Polykondensation von einem oder mehreren Rhodium-Komplexen, die mindestens einen Liganden aufweisen, welcher mindestens eine zur Koordination des Rhodiums befähigte Gruppe und mindestens eine bei der Polykondensation ein anorganisches Netzwerk ausbildende Gruppe aufweist, entweder mit sich selbst oder mit einem oder mehreren, zur Polykondensation befähigten anorganischen Netzwerkbildnern erhältlich sind, wobei sich die das anorganische Netzwerk ausbildenden Gruppen und die Netzwerkbildner von silicium, Titan, Aluminium und/oder Bor ableiten.

2.  Verfahren nach Anspruch 1, dadurch gekennzeichnet, daß die zur Koordination des Rhodiums befähigte Gruppe des Liganden eine Elektronendonor-Gruppe ist.

3.  Verfahren nach Anspruch 2, dadurch gekennzeichnet, daß der Rhodium-Komplex die allgemeine Formel (I) hat:

$[L_aL'_bRhX_c]_d$     (I)

in der L ein Ligand mit einer zur Koordination des Rhodiums befähigten Elektronendonor-Gruppe, vorzugsweise einer Phosphingruppe, und einer bei der Polykondensation ein anorganisches Netzwerk ausbildenden Gruppe ist, z.B. einer Alkoxysilan-, -aluminium-, -titan- oder -borgruppe;

L' ein von L verschiedener Elektronendonor-Ligand ist, vorzugsweise ein Phosphin-, Carbonyl- oder Amino-Ligand;

X ein zum Ladungsausgleich erforderliches organisches oder anorganisches Anion ist, vorzugsweise ein Halogenid-, Hydrid- oder Alkoholat-Anion oder ein Anion von organischen oder anorganischen Säuren;

a einen Wert von 1 bis 4 hat, vorzugsweise den Wert 1, 2 oder 3;

b einen Wert von 0 bis 4 hat, vorzugsweise den Wert 0, 1 oder 2;

c einen Wert von 0 bis 3 hat, wobei die Summe (a + b + c) ≦6 ist; und

d eine ganze Zahl mit einem Wert ≧1 ist, vorzugsweise die Zahl 1, 2, 4 oder 6.

4. Verfahren nach Anspruch 1, dadurch gekennzeichnet, daß die zur Koordination des Rhodiums befähigte Gruppe des Liganden eine ionische Gruppe ist.

5. Verfahren nach Anspruch 4, dadurch gekennzeichnet, daß der Rhodium-Komplex die allgemeine Formel (II) hat:

$$\{[L'_bRhX_c']_d\}L''_a \qquad (II)$$

in der L'' ein Ligand mit einer zur Koordination des Rhodiums befähigten ionischen Gruppe, vorzugsweise einer Ammoniumgruppe, und einer bei der Polykondensation ein anorganisches Netzwerk ausbildenden Gruppe ist, vorzugsweise einer Alkoxysilan-, -aluminium-, -titan- oder -borgruppe;

L' ein Elektronendonor-Ligand ist, vorzugsweise ein Phosphin-, Carbonyl- oder Amino-Ligand;

X ein zum Ladungsausgleich erforderliches organisches oder anorganisches Anion ist, vorzugsweise ein Halogenid-, Hydrid- oder Alkoholat-Anion oder ein Anion von organischen oder anorganischen Säuren;

a einen Wert hat, der erforderlich ist, um die Ladung des Komplex-Anions oder -Kations auszugleichen;

b einen Wert von 0 bis 4 hat, vorzugsweise den Wert 0, 1 oder 2;

c' einen Wert von 0 bis 6 hat, wobei die Summe (b + C') ≦6 ist; und

d eine ganze Zahl mit einem Wert ≧ 1 ist.

6. Verfahren nach einem der Ansprüche 1 bis 5, dadurch gekennzeichnet, daß man die Reaktion bei einer Temperatur von 50 bis 100°C und Normaldruck durchführt.

7. Verfahren nach einem der Ansprüche 1 bis 6, dadurch gekennzeichnet, daß man den Katalysator in angefeuchtetem Zustand einsetzt und mit gasförmigem CO in Kontakt bringt.

8. Verfahren nach einem der Ansprüche 1 bis 7, dadurch gekennzeichnet, daß man Wasserstoff und $CO_2$ durch katalytische Konvertierung von Wassergas herstellt.

9. Rhodium-Komplex der allgemeinen Formel (III)

$$R_mN[(CH_2)_n-Si(OR')_3]_{4-m}[Rh(CO)_2X_2] \qquad (III)$$

in der R Wasserstoff, Alkyl, Cycloalkyl, Aryl oder Aralkyl bedeutet;

$R^1$ Alkyl darstellt;

X ein zum Ladungsausgleich erforderliches organisches oder anorganisches Anion ist, vorzugsweise ein Halogenid-Anion;

n einen Wert von 1 bis 10 hat, vorzugsweise den Wert 1, 2, 3 oder 4; und

m einen Wert von 0 bis 3 hat, vorzugsweise den Wert 1,2 oder 3.

10. Rhodium-Komplex nach Anspruch 9 der Formel (IV)

$$(CH_3)_3N[CH_2)_3-Si(OCH_3)_3][Rh(CO)_2Cl_2] \qquad (IV).$$

## Claims

1. A process for catalytically converting $CO/H_2O$ mixtures using rhodium complex catalysts, wherein the reaction is carried out in the presence of solid polymeric rhodium complex catalysts insoluble in aqueous and organic solvents, which rhodium complex catalysts are obtainable by polycondensation of one or more rhodium complexes having at least one ligand that contains at least one group capable of coordinating rhodium and at least one group forming an inorganic network during polycondensation, either with itself or with one or more inorganic network forming agents capable of undergoing polycondensation, the groups forming the inorganic network and the network forming agents being derived from silicon, titanium, aluminium and/or boron.

2. A process according to claim 1, wherein the group of the ligand capable of coordinating rhodium is an electron donor group.

3. A process according to claim 2, wherein the rhodium complex has the general formula (I):

$$[L_a L'_b RhX_c] \quad (I)$$

in which L is a ligand having an electron donor group capable of coordinating rhodium, preferably a phosphine group, and a group forming an inorganic network during polycondensation, e.g., an alkoxysilane, alkoxyaluminium, alkoxytitanium or alkoxyboron group;
L' is an electron donor ligand different from L, preferably a phosphine, carbonyl or amino ligand;
X is an organic or inorganic anion required for charge neutralization, preferably a halide, hydride or alcoholate anion or an anion of organic or inorganic acids;
a has a value of from 1 to 4, preferably the value 1, 2 or 3;
b has a value of from 0 to 4, preferably the value 0, 1 or 2;
c has a value of from 0 to 3, the sum of $(a + b + c)$ being $\leq 6$; and
d is an integer having a value $\geq 1$, preferably a value of 1, 2, 4 or 6.

4. A process according to claim 1, wherein the group of the ligand capable of coordinating rhodium is an ionic group.

5. A process according to claim 4, wherein the rhodium complex has the general formula (II):

$$\{[L'_b RhX_{c'}]_d\}L''_a \quad (II)$$

in which L'' is a ligand having an ionic group capable of coordinating rhodium, preferably an ammonium group, and a group forming an inorganic network during polycondensation, preferably an alkoxysilane, alkoxyaluminium, alkoxytitanium or alkoxyboron group;
L' is an electron donor ligand, preferably a phosphine, carbonyl or amino ligand;
X is an organic or inorganic anion required for charge neutralization, preferably a halide, hydride or alcoholate anion or an anion of organic or inorganic acids;
a has a value that is required to neutralize the charge of the complex anion or cation;
b has a value of from 0 to 4, preferably the value 0, 1 or 2;
c' has a value of from 0 to 6, the sum of $(b + c')$ being $\leq 6$; and
d is an integer having a value $\geq 1$.

6. A process according to any of claims 1 to 5, wherein the reaction is carried out at a temperature of from 50 to 100°C and at normal pressure.

7. A process according to any of claims 1 to 6, wherein the catalyst is employed in moistened condition and is brought into contact with gaseous CO.

8. A process according to any of claims 1 to 7, wherein hydrogen and $CO_2$ are prepared by catalytically converting water gas.

9. A rhodium complex having the general formula (III):

$$R_m N[(CH_2)_n\text{-}Si(OR')_3]_{4-m}[Rh(CO)_2 X_2] \quad (III)$$

in which R represents hydrogen, alkyl, cycloalkyl, aryl or aralkyl;
R' denotes alkyl;
x is an organic or inorganic anion required for charge neutralization, preferably a halide anion;
n has a value of from 1 to 10, preferably the value 1, 2, 3 or 4; and
m has a value of from 0 to 3, preferably the value 1, 2 or 3.

8

**10.** A rhodium complex according to claim 9 having the formula (IV)

$(CH_3)_3N[(CH_2)_3-Si(OCH_3)_3][Rh(CO)_2Cl_2]$ (IV).

**Revendications**

**1.** Procédé de conversion catalytique de mélanges $CO/H_2O$, par utilisation de catalyseurs à base de complexe du rhodium, caractérisé en ce qu'on met en oeuvre la réaction en présence de catalyseurs solides, polymères, insolubles dans les solvants aqueux et organiques, à base de complexe du rhodium, catalyseurs que l'on peut préparer par polycondensation d'un ou plusieurs complexes du rhodium, comportant au moins un ligand, lequel comporte au moins un groupe pouvant réaliser la coordination du rhodium et au moins un groupe formant un réseau minéral lors de la polycondensation, la polycondensation étant effectuée d'une manière interne, ou avec un ou plusieurs agents de réticulation minéraux, pouvant subir une polycondensation, auquel cas les groupes minéraux formant le réseau et les agents de réticulation dérivent du silicium, du titane, de l'aluminium et/ou du bore.

**2.** Procédé selon la revendication 1, caractérisé en ce que le groupe du ligand adapté à la coordination du rhodium est un groupe donneur d'électrons.

**3.** Procédé selon la revendication 2, caractérisé en ce que le complexe du rhodium a la formule générale (I) :

$[L_aL'_bRhX_c]d$ (I)

dans laquelle L est un ligand comportant un groupe donneur d'électrons, adapté à la coordination du rhodium, de préférence un groupe phosphine, et un groupe formant lors de la polycondensation un réseau minéral , par exemple un groupe alcoxysilane, alcoxyaluminium, alcoxytitane ou alcoxybore ; L' est un ligand donneur d'électrons différent de L, de préférence un ligand phosphine, carbonyle ou amino ; X est un anion organique ou minéral , nécessaire à la compensation des charges, de préférence un anion halogénure, hydrure ou alcoolate, ou un anion d'acides organiques ou minéraux ;
a vaut 1 à 4, de préférence 1, 2 ou 3 ;
b vaut 0 à 4, de préférence 0, 1 ou 2 ;
c vaut 0 à 3, la somme $(a + b + c) \leq 6$ ; et
d est un nombre entier $\geq 1$, de préférence le nombre 1, 2, 4 ou 6.

**4.** Procédé selon la revendication 1, caractérisé en ce que le groupe du ligand adapté à la coordination du rhodium est un groupe ionique.

**5.** Procédé selon la revendication 4, caractérisé en ce que le complexe du rhodium a la formule générale (II) :

$\{[L'_bRhX_{c'}]_d\}L''a$ (II)

dans laquelle L'' est un ligand comportant un groupe ionique adapté à la coordination du rhodium, de préférence un groupe ammonium, et un groupe formant lors de la polycondensation un réseau minéral , de préférence un groupe alcoxysilane, alcoxyaluminium, alcoxytitane ou alcoxybore ; L' est un ligand donneur d'électrons, de préférence un ligand phosphine, carbonyle ou amino ;
X est un anion organique ou minéral nécessaire à la compensation des charges, de préférence un anion halogénure, hydrure ou alcoolate, ou un anion d'acides organiques ou minéraux ;
a a une valeur nécessaire à la compensation de la charge de l'anion ou du cation complexe ;
b vaut 0 à 4, de préférence 0, 1 ou 2 ;
c' vaut 0 à 6, la somme $(b + c') \leq 6$ ; et
d est un nombre entier $\geq 1$.

**6.** Procédé selon l'une des revendications 1 à 5, caractérisé en ce que la réaction est mise en oeuvre à une température de 50 à 100°C à la pression atmosphérique.

**7.** Procédé selon l'une des revendications 1 à 6, caractérisé en ce qu'on utilise le catalyseur à l'état humidifié et qu'on le met en contact avec du CO gazeux.

8. Procédé selon l'une des revendications 1 à 7, caractérisé en ce qu'on prépare de l'hydrogène et du $CO_2$ par conversion catalytique du gaz à l'eau.

9. Complexe du rhodium de formule générale (III)

$$R_mN[(CH_2)n\text{-}Si(OR')_3]_{4\text{-}m}[Rh(CO)_2X_2] \qquad (III)$$

dans laquelle R est un hydrogène ou un radical alkyle, cycloalkyle, aryle ou aralkyle ;
R' est un radical alkyle ;
X est un anion organique ou minéral nécessaire à la compensation des charges, de préférence un halogénure ;
n vaut 1 à 10, de préférence 1, 2, 3 ou 4 ; et
m vaut 0 à 3, de préférence 1, 2 ou 3.

10. Complexe du rhodium selon la revendication 9, de formule (IV)

$$(CH_3)_3N[(CH_2)_3\text{-}Si(OCH_3)_3](Rh(CO)_2CL_2] \qquad (IV).$$

10